# EUROPEAN PATENT APPLICATION

(11) **EP 4 749 888 A1**
(43) Date of publication of application: **27.05.2026**
(21) Application number: 24845304.5
(22) Date of filing: 27.06.2024
(51) Int. Cl.: H02K 3/14

(54) **WINDING FIELD ROTOR AND ROTATING ELECTRIC MACHINE**

(30) Priority: 21.07.2023 JP 2023118860
(71) Applicant: DENSO CORPORATION, Kariya-city, Aichi 448-8661 (JP)
(72) Inventor: MATSUDA, Masashi, Kariya- city, Aichi 4488661 (JP)
(74) Representative: Kuhnen & Wacker Patent- und Rechtsanwaltsbüro PartG mbB
(86) International application number: PCT/JP2024/023326
(87) International publication number: WO 2025/022922

(57) **Abstract**

A wound-field rotor (60) for use in a wound-field type rotating electrical machine (40) includes a rotor core (70) having main poles (72) provided for respective magnetic poles arranged in a circumferential direction of the rotor core and protruding in a radial direction of the rotor core and a field winding (80, 180). The field winding is formed by winding a conductor (90, 190) around each of the main poles with the radial direction serving as a winding axis direction. The conductor includes, as the conductor element, a stranded wire (91, 191) which is an aggregate of a plurality of wires (91a, 191a) twisted together. The conductor is wound around each of the main poles such that, when the wound-field rotor rotates, a direction in which a centrifugal force acting on the conductor causes the conductor to rotate substantially coincides with a direction in which a twist of the stranded wire becomes tighter.

## Description

### CROSS REFERENCE TO RELATED DOCUMENT

The present application claims the benefit of priority of Japanese Patent Application No. 2023-118860 filed on July 21, 2023, the disclosure of which is incorporated in its entirety herein by reference.

### Technical Field

This disclosure relates generally to a wound-field rotor and a rotating electrical machine including a wound-field rotor.

### BACKGROUND ART

Japanese Patent First Publication No. 2015-180175 discloses a rotor coil of a variable-speed generator motor. The rotor coil is made of wire strands each of which consists of a plurality of wires which are made of copper or a copper alloy and bundled together. In order to prevent deformation of coil ends of the rotor coil caused by centrifugal force acting when the rotor rotates, reinforcement members are joined to ends of the wire strands.

### PRIOR ART DOCUMENT

### PATENT LITERATURE

FIRST PATENT LITERATURE : Japanese Patent First Publication No. 2015-180175

### SUMMARY OF THE INVENTION

In the structure taught by the above-mentioned publication, the deformation (such as unraveling) of the ends of the wire strands made of twisted wires, caused by the centrifugal force acting on the ends of the wire strands is, as described above, minimized by the reinforcement members. However, deformation of portions of the wire strands which are located away from the ends, which is also caused by the centrifugal force, cannot be sufficiently prevented by the reinforcement members.

In view of the foregoing, it is an object of this disclosure to provide a technique for preventing twisted wires or a wire strand used as a field winding from unraveling when a rotor rotates.

According to a first aspect of this disclosure, there is provided a wound-field rotor (60) for use in a wound-field type of rotating electrical machine (40) is provided which comprises: (a) a rotor core (70) which has main poles (72) which are provided for respective magnetic poles arranged in a circumferential direction of the rotor core and project in a radial direction of the rotor core; and (b) a field winding (80, 180) which is formed by a conductor (90, 190) wound around each of the main poles with the radial direction serving as an axis direction of the field winding. The conductor includes a stranded wire (91, 191a) that is made of an aggregate of a plurality of wires (91a, 191a) twisted. The conductor is wound around the main magnetic poles with a direction, in which the conductor is rotated under action of a centrifugal force generated by rotation of the wound-field rotor, substantially coinciding with a direction in which twist of the stranded wire becomes tighter.

In the first aspect, the field winding, as described above, includes the conductor in the form of the stranded wire, which is the aggregate of the wires that are twisted together. The conductor is wound around each of the main poles such that, when the rotor rotates, the direction in which the centrifugal force acts on the conductor to cause the conductor to rotate coincides with the direction in which the twist of the stranded wire becomes tighter. Accordingly, when the rotor rotates, the twist of the stranded wire is further tightened, thereby preventing the stranded wire from being loosened during rotation of the rotor.

According to the second aspect of this disclosure, there is provided a wound-field rotor (60) for use in a wound-field type of rotating electrical machine (40) is provided which comprises: (a) a rotor core (70) which has main poles (72) which are provided for respective magnetic poles arranged in a circumferential direction of the rotor core and project in a radial direction of the rotor core; and (b) a field winding (80, 180) which is formed by a conductor (90, 190) wound around each of the main poles with the radial direction serving as an axis direction of the field winding. The conductor includes a stranded wire (91, 191a) that is made of an aggregate of a plurality of wires (91a, 191a) twisted. When the main poles are viewed in the radial direction from a rotational center axis of the wound-field rotor to the main poles, a portion of the field winding located on a right side of each of the main poles is defined as a right portion (80R, 180R), and a portion of the field winding located on a left side of each of the main poles is defined as a left portion (80L, 180L). When each of the right portions is viewed in an axial direction in which the rotation center axis extends, each of the right portions exhibits a direction of twist of the stranded wire oriented in a counterclockwise direction (KR). When each of the left portions is viewed in the axial direction, each of the left portions exhibits the direction of the twist of the stranded wire oriented in a clockwise direction (KL).

In the second aspect, the field winding, as described above, includes the conductor in the form of the stranded wire, which is the aggregate of the wires that are twisted together. When viewed in the axial direction, each of the right portions of the stranded wire is oriented to exhibit the direction of the twist of the stranded wire oriented in the counterclockwise direction (KR), that is, configured as a Z-twisted stranded wire as will be described later. When viewed in the axial direction, each of the left portions of the stranded wire is oriented to exhibit the direction of the twist of the stranded wire oriented in a clockwise direction (KL), that is, configured as an S-twisted stranded wire as will be described later. In this case, a direction in which the wires of each of the right portions are twisted coincides with a direction in which a centrifugal force acting on a corresponding one of the right portions during rotation of the rotor causes that right portion to be twisted or rotated. Likewise, a direction in which the wires of each of the left portions are twisted coincides with a direction in which the centrifugal force acting on a corresponding one of the left portions during rotation of the rotor causes that left portion to be twisted or rotated. In the structure according to the second aspect, rotation of the rotor causes the twists of the stranded wires constituting the right and left portions to become tighter, thereby preventing the stranded wires from being loosened during rotation of the rotor.

### BRIEF DESCRIPTION OF THE DRAWINGS

The above-described object, other objects, features, or beneficial advantages in this disclosure will be apparent from the following detailed discussion with reference to the drawings.

In the drawings:
Fig. 1 is a schematic diagram illustrating an overall configuration of a control system for a rotating electrical machine according to a first embodiment;
Fig. 2 is a diagram illustrating an inverter and peripheral components thereof;
Fig. 3 is a cross-sectional view of a rotor installed in a rotating electrical machine;
Fig. 4 is a diagram illustrating a resonance circuit installed in a rotor;
Fig. 5 is a cross-sectional view of a conductor constituting a field winding;
Figs. 6(a) and 6(B) are external views of portions of a stranded wire constituting a conductor;
Fig. 7 is a diagram for explaining a centrifugal force acting on a conductor when rotor rotates;
Fig. 8 is a cross-sectional view of a rotor included in a rotating electrical machine according to a second embodiment;
Fig. 9 is a cross-sectional view of a conductor constituting a field winding;
Fig. 10(a) is a diagram which illustrates a holder; and
Fig. 10(b) is a diagram which illustrates an end of a conductor firmly retained by the holder in Fig. 10(a).

### MODE FOR CARRYING OUT THE INVENTION

### FIRST EMBODIMENT

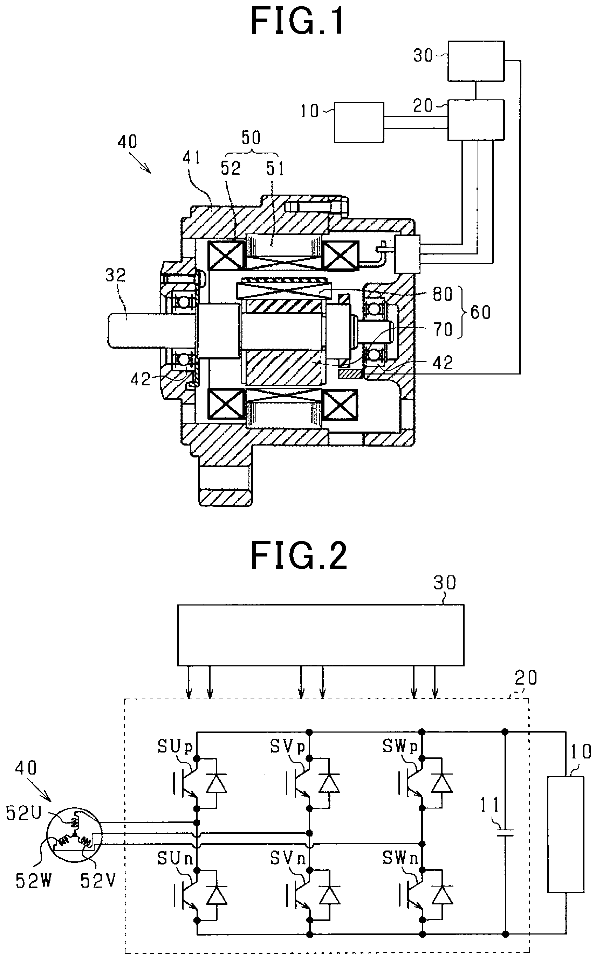

A control system, as illustrated in Fig. 1, includes the direct current (DC) power supply 10, the inverter 20, the controller 30, and the rotating electrical machine 40. The rotating electrical machine 40 is a wound-field synchronous machine, and more specifically, of a synchronous induction excitation type. In the present embodiment, the controller 30 controls the operation of the rotating electrical machine 40 such that the rotating electrical machine 40 functions as an ISG (Integrated Starter Generator) or an MG (Motor Generator), which serves as both an electrical motor and an electrical generator. For example, the rotating electrical machine 40, the inverter 20, and the controller 30 are used to make an integrated electromechanical drive unit. The rotating electrical machine 40, the inverter 20, and the controller 30 may be made of discrete components.

With reference to Fig. 1, an overview of the rotating electrical machine 40 will be described. The rotating electrical machine 40 includes the housing 41, the stator 50, and the rotor 60. The stator 50 and the rotor 60 are disposed within the housing 41. The rotating electrical machine 40 according to the present embodiment is of an inner-rotor type, in which the rotor 60 is disposed radially inside the stator 50.

The stator 50 includes the stator core 51 and the stator winding 52 wound around the stator core 51. The stator core 51 is made of a stack of steel sheets made of a soft magnetic material, and has an annular back yoke and a plurality of teeth projecting radially inward from the back yoke. The stator winding 52 is formed, for example, of copper wires, and includes the U-phase winding 52U, the V-phase winding 52V, and the W-phase winding 52W, which are arranged so as to be displaced from each other by 120 electrical degrees.

The rotor 60 includes the rotor core 70 and the field winding 80. The rotor core 70 is made of a soft magnetic material and is formed, for example, of a stack of steel sheets. The field winding 80 may be made, for example, of aluminum wire or copper wire.

The rotor core 70 has a central hole through which the rotating shaft 32 is inserted. The rotating shaft 32 is rotatably supported by the housing 41 via the bearings 42. The stator 50 and the rotor 60 are both arranged coaxially with the rotating shaft 32. In the following description, a direction along which the rotating shaft 32 extends will be referred to as an axial direction, a direction extending radially from the center of the rotating shaft 32 will be referred to as a radial direction, and a direction extending circumferentially around the rotating shaft 32 will be referred to as a circumferential direction.

As shown in Fig. 2, the inverter 20 includes series-connected pairs of U-, V-, and W-phase upper-arm switches Sup, Svp, and Swp, and U-, V-, and W-phase lower-arm switches Sun, Svn, and Swn. Connection points between the U-, V-, and W-phase upper-arm switches Sup, Svp, and Swp and the U-, V-, and W-phase lower-arm switches Sun, Svn, and Swn are connected to first ends of the U-, V-, and W-phase windings 52U, 52V, and 52W of the stator winding 52. Second ends of the U-, V-, and W-phase windings 52U, 52V, and 52W are connected together at a neutral point. In the present embodiment, the U-, V-, and W-phase windings 52U, 52V, and 52W are connected in a star configuration. In the present embodiment, each of the switches Sup to Swn is made of an IGBT. A freewheeling diode is connected in reverse parallel with each of the switches Sup, Svp, Swp, Sun, Svn, and Swn.

Collectors of the U-, V-, and W-phase upper-arm switches Sup, Svp, and Swp are connected to a positive terminal of the DC power supply 10. Emitters of the U-, V-, and W-phase lower-arm switches Sun, Svn, and Swn are connected to a negative terminal of the DC power supply 10. The smoothing capacitor 11 is connected in parallel with the DC power supply 10.

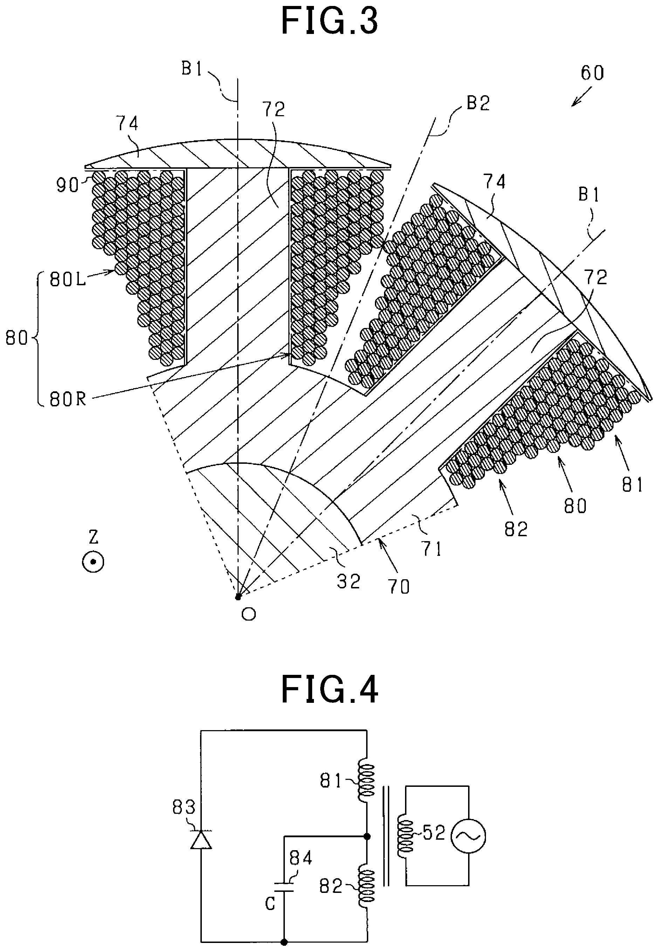

As shown in Fig. 3, the rotor core 70 of the rotor 60 includes the cylinder 71 serving as a yoke, a plurality of main poles 72 that are provided for respective magnetic poles arranged in the circumferential direction and that project radially outward from the cylinder 71, and flanges 74 that extend in circumferential opposite directions from tips of the main poles 72. In the present embodiment, the main poles 72 are arranged at equal intervals away from each other in the circumferential direction. It should be noted that, as shown in Fig. 3, the Z-axis direction is defined as a direction parallel to the rotational center axis line O of the rotating shaft 32 of the rotor 60.

The field winding 80 includes the first winding 81 and the second winding 82. Each of the main poles 72 has the first winding 81 wound on a radially outer side thereof and the second winding 82 located radially inside the first winding 81. In each of the main poles 72, winding directions of the first winding 81 and the second winding 82 are the same as each other. The winding directions of the first and second windings 81 and 82 on a first one of a respective two of the main poles 72 which are arranged adjacent to each other in the circumferential direction are opposite to those of the first and second windings 81 and 82 on a second one of the two adjacent main poles 72. This causes the main poles 72 that are adjacent to each other in the circumferential direction to be magnetized in opposite directions to each other.

The field winding 80 is made of the conductor 90 wound around each of the main poles 72. A winding-axis direction of the conductor 90 is, as can be seen in Fig. 3, oriented in a radial direction of the rotor 60. The field winding 80 includes straight portions that extend in the Z-axis direction on radial side surfaces of the main poles 72, and crossover portions (also called connecting portions) that extend in the circumferential direction of the rotor 60 while connecting ends of the straight portions. In Fig. 3, cross sections of the straight portions of the field winding 80 are illustrated. The straight portions are longer than the crossover portions. A major part of the conductor 90 constitutes the straight portions. When viewed in the radial direction of the rotor 60 from the rotational center axis line O toward the main poles 72, the straight portions extend vertically on opposite radial sides of each of the main poles 72, while the crossover portions extend laterally on vertically upper and lower sides of each of the main poles 72. Hereinafter, a positive direction of the Z-axis shown in Fig. 3 will also be referred to as an upward direction, and a negative direction of the Z-axis will also be referred to as a downward direction.

In the following discussion, an axis that extends in the radial direction and passes through both the rotational center axis line O of the rotor shaft 32 and the center axis line of each of the main poles 72 will be referred to as the first axis line B1. An axis that extends in the radial direction and passes through both the middle, in the circumferential direction, between a respective adjacent two of the first axis lines B1 and the rotational center axis line O will be referred to as the second axis line B2. Each of the first axis lines B1 corresponds to the d-axis, and each of the second axis lines B2 corresponds to the q-axis.

Fig. 4 illustrates an electric circuit installed in the rotor 60. The illustrated circuit includes the windings 81 and 82 wound around each of the main poles 72. The rotor 60 has the diode 83 serving as a rectifier, and the capacitor 84. The first winding 81 is connected at a first end thereof to the cathode of the diode 83 and at a second end thereof to a first end of the second winding 82. The diode 83 is connected at an anode thereof to a second end of the second winding 82. The capacitor 84 is connected in parallel with the second winding 82. It should be noted that, alternatively, the first end of the first winding 81 may be connected to the anode of the diode 83, and the second end of the second winding 82 may be connected to the cathode of the diode 83.

The first winding 81, the capacitor 84, and the diode 83 serve as a series resonance circuit. The second winding 82 and the capacitor 84 server as a parallel resonance circuit.

Returning back to Fig. 2, the controller 30 is an electronic control unit (ECU) that generates drive signals for turning on or off the switches SUp to SWn, which constitute the inverter 20. Specifically, the controller 30 generates drive signals to turn each arm switch SUp to SWn on and off, thereby converting direct-current power output from the DC power supply 10 into alternating-current power and supplying the alternating-current power to the U-, V-, and W-phase windings 52U, 52V, and 52W. The generated drive signals are supplied to the gates of the respective arm switches SUp to SWn.

The controller 30 turns the switches SUp to SWn on or off to create a flow of a composite current, which is a combination of a fundamental wave current and a high-frequency excitation current, through each of the phase windings 52U, 52V, and 52W. The fundamental wave current is a current mainly used for generating torque in the rotating electrical machine 40. The high-frequency excitation current is a current having a frequency higher than that of the fundamental wave current and is mainly used to excite the field winding 80 so as to cause a field current to flow through the field winding 80. The phase currents flowing through the respective phase windings 52U, 52V, and 52W are shifted from one another by 120 electrical degrees.

It should be noted that a part or all of the functions of the controller 30 may be implemented in hardware, for example, by one or more integrated circuits or the like. Alternatively, the functions of the controller 30 may be implemented by software recorded on a non-transitory tangible recording medium and executed by a computer.

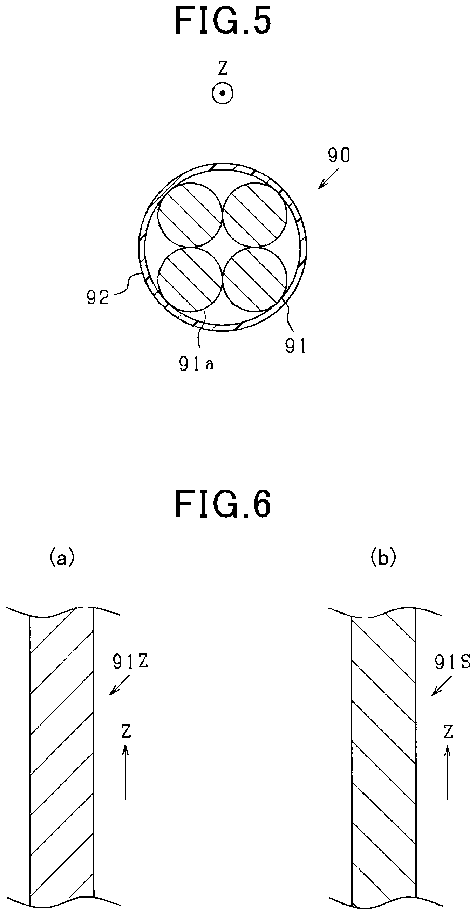

The field winding 80 is, as illustrated in Figs. 5 and 6, made of the conductor 90 which includes the stranded wire 91 consisting of a plurality of wires 91a twisted together. Each of the wires 91a is a conductor whose outer surface is covered with a polymer insulating layer such as enamel. The conductor 90 is a covered conductor made of the stranded wire 91 which is an aggregate of the wires 91a and covered with the insulating coating 92. The field winding 80 is formed by winding the conductor 90 around the main poles 72. The electrical insulation is ensured between sections conductor 90 which overlap with each other in the radial direction and between the conductor 90 and the rotor core 70.

As shown in Fig. 5, a cross section of each wire 91a taken in a direction perpendicular to its axial direction is circular, and a cross section of the conductor 90 taken in a direction perpendicular to its axial direction is also circular. Fig. 5 demonstrates an example in which four wires 91a substantially identical in shape, size, and material with each other are twisted together to form the stranded wire 91; however, the structure of the stranded wire 91 is not limited thereto. The number of wires 91a is not limited to four. Further, the stranded wire 91 may be formed by twisting together a plurality of wires that differ in shape, size, or material.

Each of the wires 91a is made of at least a carbon fiber, and preferably configured as a composite of carbon fibers. This allows the wires 91a to be reduced in weight, thereby enabling weight reduction of the conductor 90 and the field winding 80. In addition, the reduction in weight of the field winding 80 will result in a decrease in centrifugal force acting on the field winding 80 when the rotor 60 rotates, thereby allowing the thickness of the flanges 74 to be reduced, which enables the radial size of the rotor 60 to be made smaller. As the carbon fibers, nanocarbon fibers such as carbon nanotubes and carbon nanofibers can be suitably used, and a portion of the carbon may be substituted with boron or the like. The stranded wire 91 may be configured, for example, as described below.
A) All of the wires 91a constituting the stranded wire 91 are made of carbon fibers.
B) At least one of the wires 91a constituting the stranded wire 91 is made of a carbon fiber, and the remaining wires 91a are made of a material different from the carbon fiber, for example, copper or aluminum
C) All of the wires 91a constituting the stranded wire 91 are wires (e.g., composite wires) each of which is made of a mixture of a carbon fiber and a metallic material.
D) At least one of the wires 91a constituting the stranded wire 91 is a wire (for example, a composite wire) made of a mixture of a carbon fiber and a metallic material, and the remaining wires 91a are made of materials different from the above mixed material, for example, made of carbon fibers, copper, or aluminum.

The conductor 90, as described already, includes the stranded wire 91, which is an aggregate of wires 91a, thereby enabling the electrical resistance in a portion of the conductor 90 through which an eddy current flows to be reduced, as compared with a case where the conductor 90 is composed of a single wire. As the number of wires 91a increases, the cross-sectional area of each wire 91a becomes smaller, and the effect of attenuating the eddy current becomes greater. In addition, since the wires 91a of the field winding 80 are twisted, each wire 91a has portions to which magnetic fields are applied in opposite directions, whereby the induced electromotive forces are canceled out. Accordingly, the eddy current is also reduced. The rotating electrical machine 40 which employs a synchronous induction excitation system, generally uses a high-frequency excitation current for exciting the rotor 60. As the frequency of the high-frequency excitation current increases, the eddy current that may occur in the field winding 80 of the rotor 60 increases, and the loss due to the eddy current tends to increase. Therefore, in the rotating electrical machine 40, by constructing the field winding 80 using the conductor 90 having the stranded wire 91, it is possible to achieve a more significant effect in reducing the eddy current.

The stranded wire 91 may preferably employ the stranded wires 91Z and 91S having different twisting directions. When a plurality of wires 91a are twisted together in a counterclockwise (left-hand) direction from the negative side toward the positive side of the Z-axis, the Z-twisted stranded wire 91Z, as shown in Fig. 6(a), is formed. When a plurality of wires 91a are twisted together in a clockwise (right-hand) direction from the negative side toward the positive side of the Z-axis, the S-twisted stranded wire 91S, as shown in Fig. 6(b), is formed.

The conductor 90 is wound around the main poles 72 so that, when the rotor 60 rotates, the centrifugal force acting on the conductor 90 causes it to rotate in the same direction as the tightening of the twist of the stranded wire 91 that constitutes the conductor 90.

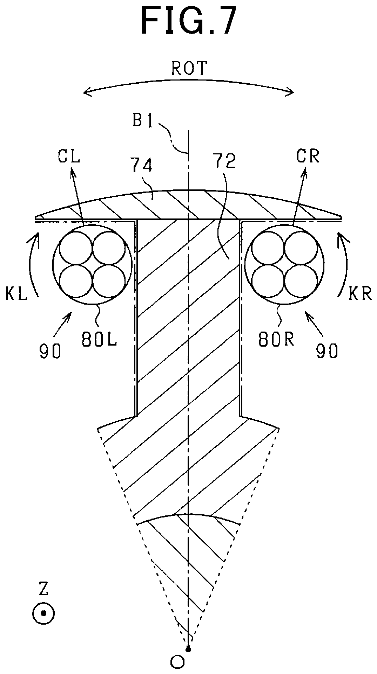

As shown in Fig. 7, when the main poles 72 are viewed in the radial direction from the rotational center axis O of the rotor 60 toward each of the main poles 72, a portion of the field winding 80 located on the right side of each of the main poles 72 will be referred to below as the right portion 80R, and a portion located on the left side of each of the main pokes 72 will be referred to below as the left portion 80L. When each of the right portions 80R of the stranded wire 91 is viewed in the axial direction, it exhibits a counterclockwise twisting direction, that is, the above-described Z-twisted stranded wire in the present embodiment. When each of the left portions 80L is viewed in the axial direction, it exhibits a clockwise twisting direction, that is, the above-described S-twisted stranded wire in the present embodiment. The field winding 80 may be formed by the conductor 90 in which Z-twisted portions and S-twisted portions alternately appear in a repeated manner as viewed in the axial direction of the rotor 60.

Fig. 7 is a diagram schematically illustrating the direction in which the conductor 90 will be twisted or rotated by the centrifugal force acting thereon when the rotor 60 rotates. As indicated by the arrow ROT in Fig. 7, when the rotor 60 rotates about the rotational center axis O, it causes the centrifugal force CR to act on the right portion 80R of the conductor 90, and the centrifugal force CL to act on the left portion 80L. The centrifugal forces CR and CL are directed parallel to the radial direction of the rotor 60 extending outward from the rotational center axis O toward the periphery of the rotor 60.

The centrifugal force CR acts as a force that causes each of the right portions 80R to be twisted or rotated counterclockwise when viewed from the positive direction of the Z-axis, as indicated by the rotational direction KR. The rotational direction KR corresponds to the direction of rotation of a left-hand screw. Each right portion 80R of the stranded wire 91 constitutes the Z-twisted stranded wire 91Z. The twisting direction of the stranded wire 91Z is such that the twist becomes tighter when each right portion 80R rotates counterclockwise as viewed from the positive direction of the Z-axis. Accordingly, the direction (rotational direction KR) in which the conductor 90 is rotated by the centrifugal force CR coincides with the direction in which the twist of the stranded wire 91Z becomes tighter.

The centrifugal force CL acts as a force that causes each left portion 80L to rotate clockwise when viewed from the positive direction of the Z-axis, as indicated by the rotational direction KL. The rotational direction KL corresponds to the direction of rotation of a right-hand screw. Each left portion 80L constitutes the S-twisted stranded wire 91S. The twisting direction of the stranded wire 91S is such that the twist becomes tighter when each left portion 80L rotates clockwise as viewed from the positive direction of the Z-axis. Accordingly, the direction (rotational direction KL) in which the conductor 90 is twisted or rotated by the centrifugal force CL coincides with the direction in which the twist of the stranded wire 91S becomes tighter.

As indicated by the rotational directions KR and KL in Fig. 7, when the rotor 60 rotates, the centrifugal forces CR and CL acting on the conductor 90 cause corresponding portions of the conductor 90 to rotate in directions such that outer surfaces of those portions of the conductor 90 which face away from a corresponding one of the main poles 72 are twisted or moved from the rotational center axis O of the rotor 60 toward the periphery of the rotor 60.

As apparent from the above discussion, when the rotor 60 rotates, it causes the conductor 90 to be twisted or rotated a direction such that the surface of a portion of the conductor 90 which is located farther from each main pole 72 to be twisted or moved from the rotational center axis O toward the outer periphery of the rotor 60. It is, therefore, preferable that the conductor 90 be wound around the main poles 72 so that the above rotational direction of the conductor 90 coincides with the direction in which the twist of the stranded wire 91 becomes tighter.

In the present embodiment, the conductor 90, as described above, includes the straight portions and the crossover portions connecting the ends of the straight portions. The straight portions are formed by the major part of the conductor 90. Accordingly, when the rotor 60 rotates, if the straight portions are configured such that the direction in which the conductor 90 is twisted or rotated by the centrifugal force acting thereon coincides with the tightening direction of the twist of the stranded wire 91 forming the conductor 90, the overall loosening of the stranded wire 91 can be effectively suppressed. Even if, in part of the conductor 90 forming the field winding 80, the twisting direction of the stranded wire 91 does not coincide with the tightening direction, as long as, in most other portions of the conductor 90, the twisting direction of the stranded wire 91 coincides with the tightening direction, the field winding 80 can be regarded as being configured such that, when the rotor 60 rotates, the direction in which the conductor 90 tends to rotate due to the centrifugal force acting thereon coincides with the tightening direction of the twist of the stranded wire 91, by virtue of the conductor 90 being wound around each of the main poles 72. To achieve the effect of suppressing loosening of the stranded wire 91 of the field winding 80, it is sufficient that 60% or more of the portions of the conductor 90 constituting the field winding 80 have a twisting direction coinciding with the tightening direction of the stranded wire 91, and preferably 70% or more.

It should be noted that the centrifugal forces CR and CL act in a direction from the rotational center axis O toward the outer periphery of the rotor 60, regardless of the rotational direction of the rotor 60. Therefore, as shown in the cross-sectional view of Fig. 3, if the conductor 90 of the field winding 80 is wound around the main poles 72 such that, each right portion 80R of the stranded wire 91 constitutes the Z-twisted stranded wire 91Z, and each left portion 80L of the stranded wire 91 constitutes the S-twisted stranded wire 91S, the twists of the stranded wire 91 becomes tighter under the action of the centrifugal forces CR and CL, irrespective of the rotational direction of the rotor 60.

As shown in Fig. 5, a cross section of each wire 91a taken in a plane perpendicular to its axial direction has a circular shape, and a cross section of the conductor 90 taken in a plane perpendicular to its axial direction also has a circular shape. As shown in Fig. 3, the conductor 90 is wound around the main poles 72 in such a manner that the axial positions of portions (i.e., turns) of the conductor 90 adjacent to each other in the circumferential direction of the rotor 60 are offset from each other in the radial direction of the rotor 60. More specifically, in the cross section of the rotor 60 shown in Fig. 3, the conductor 90 is wound around the main poles 72 such that the circular cross sections of the turns of the conductor 90 are arranged in a substantially close-packed state. By winding the conductor 90 around the main poles 72 in this manner, the space factor of the field winding 80 in the rotor 60 will be increased, thereby improving the output of the rotating electrical machine 40. In addition, since the gaps between adjacent turns of the conductor 90 are small and each turn is less likely to move, displacement of the positional relationship between the turns of the conductor 90 in the circumferential and radial directions of the rotor 60 is suppressed, and loosening of the twist of the stranded wire 91 forming the respective conductors 90 is also suppressed.

### SECOND EMBODIMENT

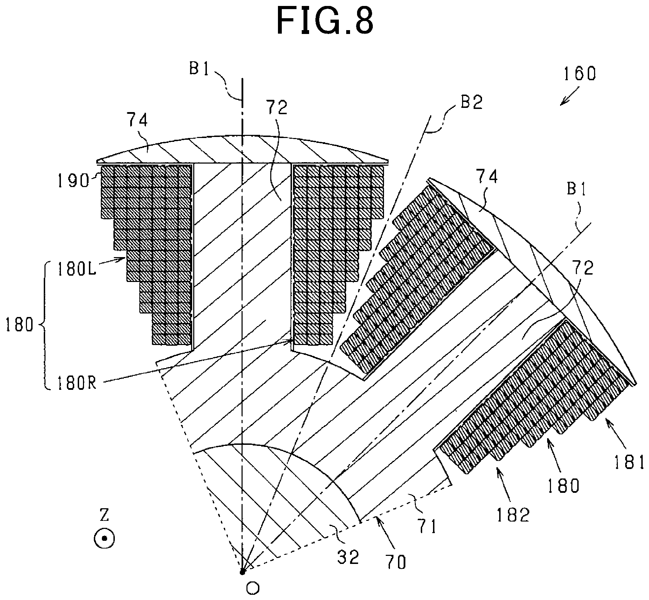

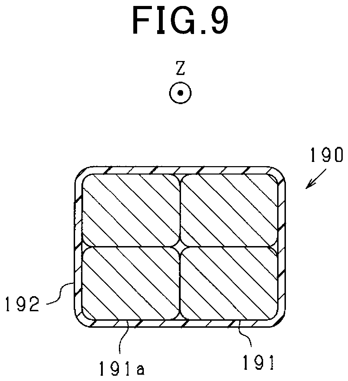

The rotating electrical machine 40 according to the second embodiment is equipped with the rotor 160 illustrated in Figs. 8 and 9 which has the field winding 180 instead of the field winding 80 in the first embodiment. In Figs. 8 and 9, components having the same configurations as those in the first embodiment are designated by the same reference numerals, and detailed descriptions thereof will be omitted here. The field winding 180 includes the first winding 181 and the second winding 182. The field winding 180 differs from the field winding 80 only in the manner in which the conductor 190 is wound. Since the first winding 181 is identical to the first winding 81, and the second winding 182 is identical to the second winding 82, detailed descriptions thereof are omitted.

As shown in Fig. 9, the conductor 190 that constitutes the field winding 180 includes, as a conductor, the stranded wire 191 made of an aggregate of a plurality of wires 191a twisted together. Each wire 191a is a conductor whose surface is covered with a polymer insulating layer, similarly to the wires 91a. The conductor 190 is an insulated conductor in which the stranded wire 191, being an aggregate of the wires 191a, is covered with the insulating coating 192. The material constituting the conductor 190 is the same as that constituting the conductor 90.

As shown in Fig. 9, a cross section of each wire 191a taken in a direction perpendicular to its axial direction has, for example, a rectangular shape. A cross section of the conductor 190 taken in a direction perpendicular to its axial direction also has, for example, a rectangular shape. The stranded wire 191 is formed by twisting together the wires 191a, which are substantially identical in shape, size, and material.

The conductor 190 constituting the field winding 180 is wound around the main poles 72 such that the direction in which the conductor 190 is twisted or rotated by the centrifugal force acting thereon when the rotor 160 rotates, coincides with the direction in which the twist of the stranded wire 191 becomes tighter. When the rotor 160 rotates, it causes the conductor 190 to be rotated in a direction such that the surface of a portion of the conductor 190 which is located farther away from each of the main poles 72 moves from the rotational center axis O to the outer periphery of the rotor 160. Accordingly, it is preferable that the conductor 190 be wound around the main poles 72 so that the direction of twisting or rotation of the conductor 90 arising from the rotation of the rotor 160 coincides with the direction in which the twist of the stranded wire 191 become tighter.

The field winding 180, like the field winding 80, includes the right portion 180R and the left portion 180L which are wound around each of the main poles 72. The right portions 180R of the stranded wire 191 constitute the Z-twisted stranded wire, while the left portions 180L of the stranded wire 191 constitute the S-twisted stranded wire. The field winding 180, like the above embodiments, includes the straight portions and the crossover portions. Most of the conductor 190 includes the straight portions. Therefore, when the field winding 180 is wound such that the direction in which each of the straight portions of the conductor 190 is rotated under the action of centrifugal force during rotation of the rotor 160 coincides with the direction in which the twist of the stranded wire 191 becomes tighter, it provides an effect of suppressing the loosening of the stranded wire 191.

As shown in Fig. 8, the conductor 190 is wound around the main poles 72 in such a manner that the axial positions (i.e., the center positions) of portions (i.e., turns) of the conductor 90 which are located adjacent to each other in a direction perpendicular to the radial direction of the rotor 160 are aligned with the radial direction of the rotor 160. In other words, as viewed in the cross section of the rotor 160 shown in Fig. 8, the conductor 90 is wound around the main poles 72 such that the rectangular cross sections of the turns of the conductor 90 are arranged in a substantially close-packed state. By winding the conductor 90 around the main poles 72 in this manner, the space factor of the field winding 180 in the rotor 160 will be increased, thereby improving the output of the rotating electrical machine 40. In addition, since the gaps between adjacent turns of the conductor 90 are small and each turn is less likely to move, displacement of the positional relationship between the turns of the conductor 90 in the circumferential and radial directions of the rotor 60 is suppressed, and loosening of the twist of the stranded wire 91 forming the respective conductors 90 is also suppressed.

The conductor 190 having a rectangular cross section, as shown in Figs. 8 and 9, may be produced, for example, by compressively forming a conductor having a circular cross section, like the conductor 90 shown in Fig. 5. According to the field winding 180 of the second embodiment, through the compressive forming process, not only can the gaps between adjacent turns of the conductors 190 be reduced, but also the gaps between the adjacent wires 191a constituting each conductor 190 can be reduced. Therefore, the effect of further increasing the space factor of the field winding 180 in the rotor 160 is more effectively obtained.

### OTHER EMBODIMENTS

The above-described embodiments may be modified in the following ways.

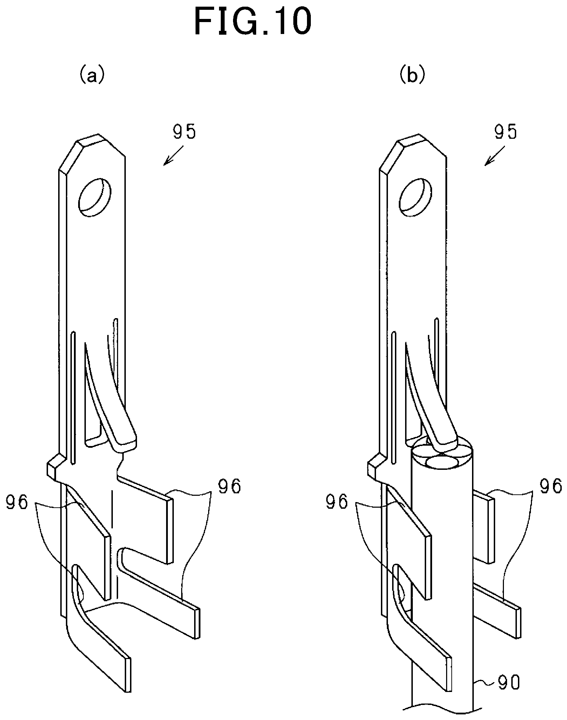

In the first and second embodiments, holders for keeping the twisted state of the stranded wires 91 and 191 may be attached to the ends of the conductors 90 and 190. Taking the conductor 90 as an example, as shown in Fig. 10(a), the holder 95 includes the crimping sections 96 which firmly hold or grip each end of the conductor 90. As shown in Fig. 10(b), by holding the end of the conductor 90 with the crimping sections 96, loosening of the stranded wire at the end of the conductor 90 is suppressed. The holder 95 is made of a conductive material, and a portion of the holder 95 farther away from the crimping sections 96 serves as a terminal. For example, the conductor 90 may be configured in the form of coils, one wound around each of the main poles 72. The holders 95 are attached to ends of each coil. The coils wound around the main poles 72 are electrically connected together through the holders 95 to complete the field winding 80.

The capacitor 84 constituting the resonance circuit of the rotor 60 may be connected in parallel with the first winding 81 instead of the second winding 82. Alternatively, the resonance circuit may be configured without including the capacitor 84.

The rotating electrical machine 40 is not limited to an inner-rotor type, but may also be an outer-rotor type. In this case, the main poles 72 protrude radially inward from the rotor core 70.

The rotating electrical machine 40 is not limited to a star-connected type, but may also be a delta-connected type.

The stator core 51 is not limited to one provided with teeth, but may instead be designed without teeth.

An electrical structure working to supply a field current to the field winding 80 or 180 is not limited to the circuit illustrated in Fig. 4. For example, the electrical structure may include a brush electrically connected to the field winding 80 or 180 and a power source electrically connected to the brush. This eliminates the need for applying a high-frequency excitation voltage to the stator winding 52 to induce a field current.

The rotating electrical machine 40 is, as described above, used as an in-vehicle main power source, but may alternatively be designed as an integrated starter generator (ISG) that functions as a generator/motor.

The mobile body on which the control system is mounted is not limited to a vehicle, but may be, for example, an aircraft or a vessel. Furthermore, the control system is not limited to one mounted on a mobile body, but may also be configured as a stationary system.

Hereinafter, characteristic configurations extracted from the above-described embodiments will be described.

### FIRST STRUCTURE

A wound-field rotor (60) for use in a wound-field type of rotating electrical machine (40) is provided which comprises: (a) a rotor core (70) which has main poles (72) which are provided for respective magnetic poles arranged in a circumferential direction of the rotor core and project in a radial direction of the rotor core; and (b) a field winding (80, 180) which is formed by a conductor (90, 190) wound around each of the main poles with the radial direction serving as an axis direction of the field winding. The conductor includes a stranded wire (91, 191a) that is made of an aggregate of a plurality of wires (91a, 191a) twisted. The conductor is wound around the main magnetic poles with a direction, in which the conductor is rotated under action of a centrifugal force generated by rotation of the wound-field rotor, substantially coinciding with a direction in which twist of the stranded wire becomes tighter.

### SECOND STRUCTURE

A wound-field rotor (60) for use in a wound-field type of rotating electrical machine (40) is provided which comprises: (a) a rotor core (70) which has main poles (72) which are provided for respective magnetic poles arranged in a circumferential direction of the rotor core and project in a radial direction of the rotor core; and (b) a field winding (80, 180) which is formed by a conductor (90, 190) wound around each of the main poles with the radial direction serving as an axis direction of the field winding. The conductor includes a stranded wire (91, 191a) that is made of an aggregate of a plurality of wires (91a, 191a) twisted. When the main poles are viewed in the radial direction from a rotational center axis of the wound-field rotor to the main poles, a portion of the field winding located on a right side of each of the main poles is defined as a right portion (80R, 180R), and a portion of the field winding located on a left side of each of the main poles is defined as a left portion (80L, 180L). When each of the right portions is viewed in an axial direction in which the rotation center axis extends, each of the right portions exhibits a direction of twist of the stranded wire oriented in a counterclockwise direction (KR). When each of the left portions is viewed in the axial direction, each of the left portions exhibits the direction of the twist of the stranded wire oriented in a clockwise direction (KL).

### THIRD STRUCTURE

The wound-field rotor as set forth in the above-described first or second structure, wherein each of the wires is made of at least a carbon fiber.

### FOURTH STRUCTURE

The wound-field rotor as set forth in the above-described third structure, wherein all of the wires of the stranded wire are made of carbon fibers, at least one of the wires of the stranded wire is made of a carbon fiber, and remaining wires are made of a material different from the carbon fiber, all of the wires of the stranded wire are each made of a mixture of a carbon fiber and a metallic material, or alternatively at least one of the wires of the stranded wire is made of a composite wire that is a mixture of a carbon fiber and a metallic material, and remaining wires are each made of materials different from that of the composite wire.

### FIFTH STRUCTURE

The wound-field rotor as set forth in any one of the above-described first to fourth structures, wherein holders (95) are attached to ends of the conductor to maintain the twist of the stranded wire.

### SIXTH STRUCTURE

The wound-field rotor as set forth in any one of the above-described first to fifth structures, wherein cross sections of the wires and the conductor taking in a plane perpendicular to the axial direction have a circular shape, and the conductor is wound around the main poles with portions of the conductor, which are arranged adjacent to each other in the circumferential direction, having axial positions offset from each other in the radial direction.

### SEVENTH STRUCTURE

The wound-field rotor as set forth in any one of the above-described first to fifth structures, wherein the conductor is produced by compressive forming.

### EIGHTH STRUCTURE

A rotating electrical machine (40) is provided which comprises: (a) the wound-field rotor set forth in any one of the above-described first to seventh structures; and (b) a stator (50) including a stator winding (52). The rotating electrical machine is configured so that a high-frequency current is supplied to the stator winding to induce voltage at the field winding to create a flow of field current in the field winding.

The present disclosure has been described based on embodiments; however, it is to be understood that the present disclosure is not limited to such embodiments or structures. The present disclosure also encompasses various modifications and alterations within the scope of equivalents. Furthermore, various combinations and arrangements, as well as other variations including only one, more than one, or fewer than one of the elements described above, are also included within the scope and spirit of the present disclosure.

## Claims

1. A wound-field rotor (60) for use in a wound-field type of rotating electrical machine (40) comprising:
a rotor core (70) which has main poles (72) which are provided for respective magnetic poles arranged in a circumferential direction of the rotor core and project in a radial direction of the rotor core; and
a field winding (80, 180) which is formed by a conductor (90, 190) wound around each of the main poles with the radial direction serving as an axis direction of the field winding, wherein
the conductor includes a stranded wire (91, 191a) that is made of an aggregate of a plurality of wires (91a, 191a) twisted, and
the conductor is wound around the main magnetic poles with a direction in which the conductor is rotated under action of a centrifugal force generated by rotation of the wound-field rotor substantially coinciding with a direction in which twist of the stranded wire becomes tighter.

2. A wound-field rotor (60) for use in a wound-field type of rotating electrical machine (40) comprising:
a rotor core (70) which has main poles (72) which are provided for respective magnetic poles arranged in a circumferential direction of the rotor core and project in a radial direction of the rotor core; and
a field winding (80, 180) which is formed by a conductor (90, 190) wound around each of the main poles with the radial direction serving as an axis direction of the field winding, wherein
the conductor includes a stranded wire (91, 191a) that is made of an aggregate of a plurality of wires (91a, 191a) that are twisted,
when the main poles are viewed in the radial direction from a rotational center axis of the wound-field rotor to the main poles, a portion of the field winding located on a right side of each of the main poles is defined as a right portion (80R, 180R), and a portion of the field winding located on a left side of each of the main poles is defined as a left portion (80L, 180L),
when each of the right portions is viewed in an axial direction in which the rotation center axis extends, each of the right portions exhibits a direction of twist of the stranded wire oriented in a counterclockwise direction (KR), and
when each of the left portions is viewed in the axial direction, each of the left portions exhibits the direction of the twist of the stranded wire oriented in a clockwise direction (KL).

3. The wound-field rotor as set forth in claim 1 or 2, wherein each of the wires is made of at least a carbon fiber.

4. The wound-field rotor as set forth in claim 3, wherein
all of the wires of the stranded wire are made of carbon fibers,
at least one of the wires of the stranded wire is made of a carbon fiber, and remaining wires are made of a material different from the carbon fiber,
all of the wires of the stranded wire are each made of a mixture of a carbon fiber and a metallic material, or
at least one of the wires of the stranded wire is made of a composite wire that is a mixture of a carbon fiber and a metallic material, and remaining wires are each made of materials different from that of the composite wire.

5. The wound-field rotor as set forth in claim 1 or 2, wherein holders (95) are attached to ends of the conductor to maintain the twist of the stranded wire.

6. The wound-field rotor as set forth in claim 1 or 2, wherein cross sections of the wires and the conductor taking in a plane perpendicular to the axial direction have a circular shape, and
the conductor is wound around the main poles with portions of the conductor, which are arranged adjacent to each other in the circumferential direction, having axial positions offset from each other in the radial direction.

7. The wound-field rotor as set forth in claim 1 or 2, wherein the conductor is produced by compressive forming.

8. A rotating electrical machine (40) comprising:
a wound-field rotor set forth in claim 1 or 2; and
a stator (50) including a stator winding (52), wherein
a flow of field current is produced in the field winding by supplying a high-frequency current to the stator winding to induce voltage at the field winding.
